# EUROPEAN PATENT SPECIFICATION

(11) **EP 1 746 742 B1**
(45) Date of publication and mention of the grant of the patent: **13.08.2008**
(21) Application number: 05291569.1
(22) Date of filing: 20.07.2005
(51) Int. Cl.: H04B 7/26, H04L 7/04

(54) **Method for estimating the time of arrival of an access burst, and apparatus**
Verfahren zur Schätzung der Ankunftszeit eines Zugriffsbursts, und Vorrichtung
Procédé pour l'estimation du temps de réception d'un salve d'accès, et appareil

(43) Date of publication of application: 24.01.2007
(73) Proprietor: Alcatel Lucent, 75008 Paris (FR)
(72) Inventor: Wessel, Rudolf, 70732 Stuttgart (DE); Nikolai, Dirk, 70825 Korntal-Münchingen (DE)
(74) Representative: Schmidt, Werner Karl

(56) References cited:
- US-B1- 6 363 130
- "Digital cellular telecommunications system (Phase 2+); Modulation (3GPP TS 05.04 version 7.3.0 Release 1998); ETSI TS 100 959" ETSI STANDARDS, EUROPEAN TELECOMMUNICATIONS STANDARDS INSTITUTE, SOPHIA-ANTIPO, FR, vol. 3-G;3-G1, no. V730, June 2001 (2001-06), XP014005837 ISSN: 0000-0001
- "Digital cellular telecommunications system (Phase 2+); Multiplexing and multiple access on the radio path (3GPP TS 05.02 version 7.7.0 Release 1998); ETSI TS 100 908" ETSI STANDARDS, EUROPEAN TELECOMMUNICATIONS STANDARDS INSTITUTE, SOPHIA-ANTIPO, FR, vol. 3-G1;3-G2;SMG2, no. V770, August 2001 (2001-08), XP014005605 ISSN: 0000-0001

## Description

The present invention refers to a method for estimating the time of arrival (TOA) of an access burst (AB) received in a base transceiver station (BTS) of a mobile communication system. The mobile communication system is designed for data transmission in time slots, each time slot being divided into a number of symbol periods. A symbol difference of received and demodulated complex symbols contained in the symbol periods is used for estimating the TOA of the AB.

Further, the invention refers to a computer program adapted for running on a processor of a base transceiver station.

Yet further, the present invention refers to an Access Burst (AB) detector of a base transceiver station (BTS) of a mobile communication system designed for data transmission in time slots, each time slot being divided into a number of symbol periods. The AB-detector comprises means for estimating the time of arrival (TOA) of the AB based on a symbol difference of received and demodulated complex symbols contained in the symbol periods.

Finally, the invention refers to a base transceiver station (BTS) of a mobile communication system designed for data transmission in time slots, each time slot being divided into a number of symbol periods. The BTS comprises an AB-detector for estimating the time of arrival (TOA) of the AB based on a symbol difference of received and demodulated complex symbols contained in the symbol periods.

There are various kinds of mobile communication systems known in the art designed for data transmission in time slots. E. g., in GSM (Global System for Mobile Communications) a physical channel uses a combination of a frequency and time division multiplexing and is defined as a sequence of radio frequency channels and time slots. The complete definition of a particular physical channel consists of a description in the frequency domain, and as description in the time domain. The description in the frequency domain is addressed in subclause 5.4 of the publication "3GPP TS 05.02 V8.11.0 (2003-06, Technical Specification)"; the description in the time domain is addressed in subclause 5.5 of that publication.

With each time slot of a TDMA (Time Divisional Multiple Access)-frame so-called data bursts are transmitted, the data bursts having a length of 156,25 bit, corresponding to a time period of 576,6 µs (15/26 ms). The so-called tail-bits of the data bursts serve for formation of the edges of the bursts to be transmitted and have the value "logical zero".

A time slot is divided into 156,25 symbol periods. For GMSK (Gausssian Minimum Shift Keying) modulation a symbol is equivalent to a bit. A particular bit period within a time slot is referenced by a bit number (BN), with the first bit period being numbered 0, and the last (1/4) bit period being numbered 156. For 8PSK (8-phase shift keying) modulation one symbol corresponds to three bits. A particular bit period within a time slot is referenced by a bit number (BN), with the first bit being numbered 0, and the last (3/4) bit being numbered 468. The bits are mapped to symbols in ascending order.

In the following, the transmission timing of a burst within a time slot is defined in terms of bit numbers. The bit with the lowest bit number is transmitted first. Different types of bursts exist in the system. One characteristic of a burst is its useful duration. There are so-called full bursts of 147 symbols useful duration, and a short burst of 87 symbols useful duration. The useful part of a burst is defined as beginning from halfway from symbol number 0. The definition of the useful part of a burst needs to be considered in conjunction with the requirements placed on the phase and amplitude characteristics of a burst as specified in the publication "3GPP TS 05.04" and the publication "3GPP TS 05.05".

The period between two bursts appearing in successive time slots is called the guard period. The guard period is provided, because it is required for the microslots that transmission be attenuated for the period between bursts with the necessary ramp up and down occurring during the guard periods as defined in the publication "3GPP TS 05.05". A base transceiver station is not required to have a capability to ramp down and up between adjacent bursts, but is required to have a capability to ramp down and up for non-used time slots, as defined in the publication "3GPP TS 05.05". In any case, where the amplitude of transmission is ramped up and down, then by applying an appropriate modulation bit stream interference to other RF (Radio Frequency) channels can be minimized.

The access burst (AB) serves for establishing a connection between a mobile station (MS) and a base transceiver station (BTS). The access burst is used for random multiple access on the random access channel (RACH). An important aspect is the fact that the AB has a much larger guard period than the other bursts (68,25 bit compared to 8,25 bits), for avoiding collision on the RACH caused by mobile stations not yet synchronized. This results in a protected time period of at least 200 µs (with a maximum radius of the radio cells of 35 km). The training sequence of the AB is known to the BTS, thereby allowing the BTS to detect the AB. For that purpose there are search routines implemented in a signal processing module, hereinafter referred to as AB (Access Burst)-detector, of the BTS.

Access bursts are used on the GSM physical layer to build up a connection between the mobile station (MS) and the base transceiver station (BTS). These access bursts comprise a much shorter useful part than the other bursts in order to guarantee that no overlapping between subsequent time slots occurs caused by mobile systems not yet synchronized to the BTS. The access burst comprises a training sequence code (TSC) and signaling data (cf. publication "3GPP TS 05.02", Section 5.2.7). For EDGE (Enhanced Data for GSM Evolution) there are three different TSCs used for signalizing to the BTS the capability of the MS (TSC0: GMSK data format; TSC1: 8PSK in downlink and uplink; TS2: 8PSK only in downlink). The BTS has to find out the TSC used by the MS and has to transmit this information to the base station controller (BSC) which is responsible for the administration of the radio resources of a number of radio cells connected to the BSC. The task of detecting an AB in the received data and of identifying the used TSC is performed by the AB-detector on the digital part of the transceiver equipment.

The AB-detector can make part of a demodulator of a BTS of a mobile communication system designed for data transmission. The search routine used in the AB-detector or the demodulator, respectively, calculates the correlation of the incoming data for all three TSCs. Because the time of arrival (TOA) of an access burst within a time slot is undetermined, the correlations have to be performed for all possible times of arrival. There are 63 possible TOA values which requires a correlation length that is slightly larger, e. g. 72 symbol periods. The full correlations (TSC-length: 41 x correlation length: 72 x different TSC : 3) cannot be calculated in the AB-detectors currently used in BTSs when only limited processing power of the used digital signal processor (DSP) is available. Therefore, it is known in the prior art to roughly estimate the TOA before calculating the correlation thereby reducing the correlation length and processing power required. If at least a rough estimate for the TOA of, e. g., a range of seven symbol periods can be derived, the processing power required is reduced by a factor of 72/7 approximately 10.

For roughly estimating the TOA of the TSC of an AB, a so-called energy search algorithm may be implemented. The energy search algorithm is used for reducing the TOA range before performing the correlation. In the publication "3GPP TS 05.05" the burst shaping of an access burst is described. The burst shaping will become apparent when looking at the energy of the symbols of an access burst. According to the energy search algorithm, the energy of a detection window with a length of 88 samples is summarized. The maximum of a graph consisting of the sum of the energy of the samples marks the beginning of the access burst or rather the TSC within the access burst. With this estimation of the position of the TSC within the AB, the correlation length and the processing requirements can be reduced.

However, the energy search algorithm only works with power shaping turned on. For multi-slot transmission the power shaping is switched off. That means that the RF (Radio Frequency) power is not ramped up and down for two subsequent time slots. E. g., that is the case in data connections using EGPRS (Enhanced GRPS) making use of channel bundling.

A method of the above-mentioned kind is known from US 6,363,130. In particular, it is disclosed there to estimate the TOA of an AB by comparing the squared distance (between a sample of a received signal in a current symbol period and a predicted sample) with a threshold. In order to ensure an accurate and reliable estimation of the TOA of the AB, the value of the threshold must be carefully selected. Otherwise the estimated TOA is too early or too late, causing problems concerning the available processing power when calculating the correlation of the incoming data during demodulation. Therefore, this document suggests how to define the threshold in order to achieve an accurate and reliable estimation of the TOA. In particular, it is suggested to produce the threshold depending on the power of the received signal in the preceding symbol period.

It is an object of the present invention to provide for an accurate and reliable estimation of the TOA of an AB, without the need for complicated configuration and definition of certain parameters necessary for performing the estimation beforehand, in particular without the need for defining a threshold-value necessary for determining identity of consecutive symbol periods by comparing the squared distance (or any other kind of absolute values of the complex differences between consecutive symbols) with the threshold.

According to the present invention this object is solved by a method for estimating the TOA of an AB of the above-mentioned kind, characterized in that
- a detection window of a given length is moved over the time slot in discrete steps, each step corresponding to one symbol period, the detection window comprising less symbol periods than the time slot,
- a symbol difference of all complex symbols contained in the symbol periods of the time slot is calculated,
- for each of the discrete steps a sum of the symbol differences for the symbol periods covered by the detection window during the current step is calculated, and
- one of the discrete steps for which the maximum of the sum of the symbol difference occurs is assumed to be the TOA of the AB within the time slot.

According to the present invention, instead of an energy search algorithm a so-called phase modulation search algorithm is suggested. After demodulation in the AB-detector or the BTS demodulator (p/2 phase rotation), respectively, a constant phase modulation is obtained outside the useful part of the access burst - non-constant phase modulation is limited to the region where the access burst is received. The symbol difference of the received and demodulated complex symbols can be used for the search function. A first difference is calculated by forming the difference between two symbols contained in subsequent symbol periods. Then, the sum of these absolute values of the first difference over a detection window or so-called summarizing window is calculated. The graph comprising the summarized absolute values of the first differences again allows a reliable and easy detection of the beginning of the access burst. The method according to the present invention works well, no matter whether power shaping is turned on or switched off.

If the energy shaping is switched off, the symbol difference outside the useful part of the burst is small due to the lack of the modulation. If the power shaping is switched on, the symbol difference is small, too, because the first difference of symbols carrying no energy is small.

According to a preferred embodiment of the present invention it is suggested that for calculating the symbol difference of the complex symbols, for each of the symbol periods the difference of at least two subsequent complex symbols is calculated.

Further, it is suggested that for calculating the symbol difference of the complex symbols, for each of the symbol periods the absolute value of the difference of at least two subsequent complex symbols is calculated.

Further, it is possible that the detection window is moved over the entire time slot in discrete steps for all possible TOAs. In a preferred embodiment the window length corresponds to the length of the useful part of the AB, i.e. 88 symbols. Because only the maximum of the graph comprising the sum is searched, the calculation of the graph can be simplified by adding the value at window length plus counter and subtracting the value at counter again. By doing so the search algorithm can be simplified and at the same time accelerated.

It is further suggested that the method according to the present invention is used for estimating the TOA of the AB as part of a method for detecting a training sequence code (TSC) which is sent from a mobile station (MS) to the BTS inside the AB. Preferably, after estimating the TOA of the AB, a correlation of the data contained in the time slot is calculated.

According to a preferred realization of the present invention, a computer program of the above-mentioned kind is suggested, the program being programmed to perform the method according to the present invention when running on the processor of the BTS.

Further, according to the present invention, an AB-detector of a BTS is suggested, characterized in that the AB detector comprises
- means for moving a detection window of a given length over the time slot in discrete steps, each step corresponding to one symbol period, the detection window comprising less symbol periods than the time slot,
- means for calculating a symbol difference of all complex symbols contained in the symbol periods of the time slot,
- means for calculating for each of the discrete steps a sum of the symbol differences for the symbol periods covered by the detection window during the current step, and
- means for assuming that one of the discrete steps, for which the maximum of the sum of the symbol difference occurs, is the TOA of the AB within the time slot.

According to a preferred embodiment of the invention, the AB-detector comprises means for performing the method according to the present invention.

Finally, the present invention refers to a BTS of a mobile communication system of the above-mentioned kind, characterized in that the BTS comprises an AB detector according to the present invention.

According to a preferred embodiment of the invention, it is suggested that the BTS comprises a demodulator and that the AB-detector makes part of the demodulator. Further it is suggested that the demodulator comprises means for performing the method according to the present invention.

The features of the present invention are described and the advantages will become more apparent in the following description, when taken together with the figures. In particular,
- Figure 1: shows a mobile communication system for realizing the present invention;
- Figure 2: shows a frequency for transmitting data across the mobile communication system, the frequency being divided into eight time slots for eight mobile systems, and normal bursts transmitted in slots #3 and #4;
- Figure 3: shows a frequency for transmitting data across the mobile communication system, the frequency being divided into eight time slots for eight mobile systems, and an access burst transmitted in slot #4;
- Figure 4: shows the energy of symbols contained in the symbol periods of a time slot and the corresponding energy window sum used as a search criteria in the energy search algorithm known from the prior art with energy shaping on;
- Figure 5: shows the energy of symbols contained in the symbol periods of a time slot and the corresponding energy window sum used as a search criteria in the energy search algorithm known from the prior art with energy shaping off;
- Figure 6: shows the absolute symbol difference of symbols contained in the symbol periods of a time slot and the corresponding window sum used as a search criteria for an access burst according to the present invention with energy shaping on;
- Figure 7: shows the absolute symbol difference of symbols contained in the symbol periods of a time slot and the corresponding window sum used as a search criteria for an access burst according to the present invention with energy shaping off;
- Figure 8: shows a simulated raw bit error rate (BER) of an access burst depending on the SNR (Signaled Noise Ratio) with and without TSC (Training Sequence Code) detection for access bursts with energy shaping on, whereas TSC detection has been performed with the phase modulation search algorithm according to the present invention; and
- Figure 9: shows a simulated raw bit error rate (BER) of an access burst depending on the SNR (Signaled Noise Ratio) with and without TSC (Training Sequence Code) detection for access bursts without energy shaping, whereas TSC detection has been performed with the phase modulation search algorithm according to the present invention.

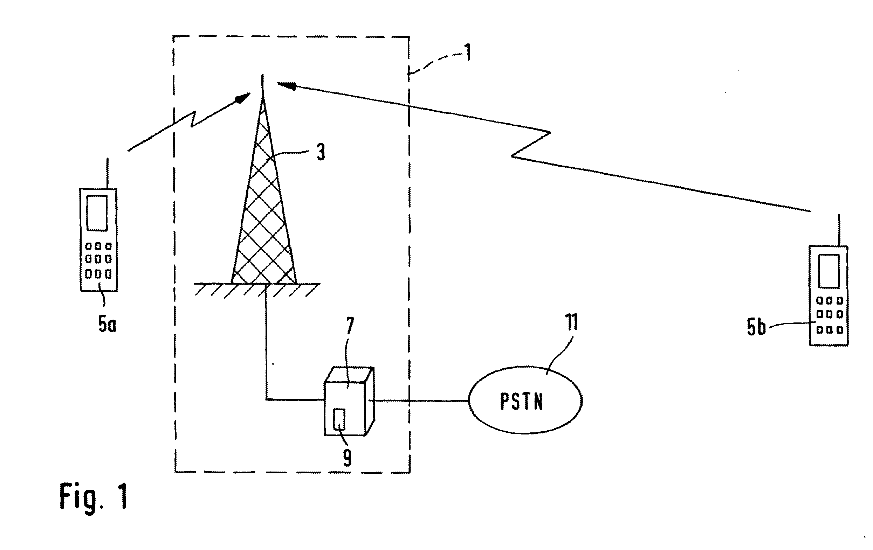

Figure 1 shows a mobile communication system in which the present invention can be realized. The mobile communication system comprises a number of base transceiver stations (BTS) of which in Figure 1 only one is shown by way of example. The BTS in its entirety is designated with reference sign 1. The BTS 1 comprises an antenna 3 for receiving radio frequency signals from a plurality of mobile stations (MS) 5, which are disposed within a radio cell serviced by the BTS 1. The plurality of MSs is represented in Figure 1 by two MSs 5a and 5b, of which MS 5a is disposed nearer to the antenna 3 than the other MS 5b. Further, the BTS 1 comprises a demodulator 7 for demodulating the radio signals received by the antenna 3. A signal processing module, hereinafter referred to as AB (Access Burst)-detector, can make part of the demodulator 7. However, it is also possible that the AB-detector can be disposed in a separate unit or entity outside the demodulator 7, too.

The demodulator 7 comprises at least part of a processor 9 adapted for executing computer programs. Apart from demodulating the received radio signals, the demodulator 7 or the processor 9, respectively, can perform a number of other tasks, which are explained in detail below. The demodulator 7 is somehow connected to a terrestrial communication system referred to, by way of example, as PSTN (Public Switched Telephone Network) 11. Of course, a mobile communication system for performing the present invention can, and indeed does, comprise more components, which, however, are not important for the present invention and, therefore, are not explicitly shown in Figure 1.

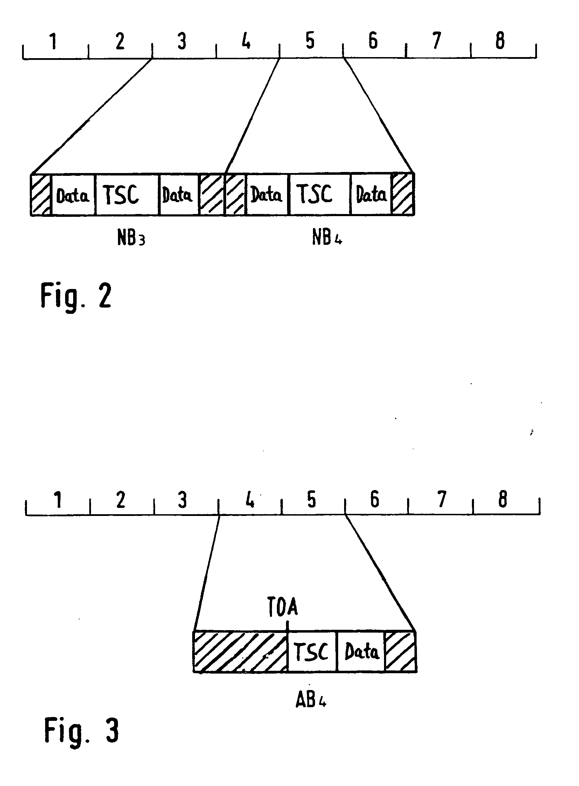

The mobile communication system shown in Figure 1 is designed for data transmission according to TDMA (Time Divisional Multiple Access). This means that a frequency used for transmitting data from the MSs 5 to the BTS 1 and vice versa is divided into a number of time slots. This is shown in Figure 2, where a frequency is divided into eight time slots for transmitting data between a BTS 1 and up to eight different MSs 5. With each time slot of a TDMA-frame so called-data bursts with a length of 156,25 bit are transmitted, corresponding to a time period of 576,6 µs (15/26 ms). However, the present invention shall not be limited to TDMA data transmission in time slots, each time slot being divided into a number of symbol periods.

Figure 2 shows the transmission of a so-called normal burst (NB) in time slots #3 and #4. At the end of each of the bursts, there is a guard period comprising a number of bits necessary for effectively avoiding overlapping of bursts transmitted in subsequent time slots. As usually, the bursts begin at the beginning of the time slots, it is sufficient, if the guard period comprises a few bits. Therefore, normal burst (NB), frequency correction burst (FB), synchronization burst (SB), and dummy burst (DB) comprise only 8,25 bits. In contrast thereto, the access burst (AB) is transmitted from a MS to a BTS in the course of and with the objective of establishing a connection between the MS and the BTS, and the MS is not yet synchronized, the AB comprises 68,25 bits of guard period to definitely avoid overlapping data bursts in subsequent time slots. This leads to the situation that at the time of establishing a connection from a MS to a BTS, the BTS receives a data signal with an AB in the time slot associated with the MS (time slot #4 in Figure 3) with the TSC being positioned at a certain position within the time slot. The position of the TSC within the time slot depends mainly on the distance of the MS 5 to the BTS 1. If, e. g., the MS 5a is disposed rather near to the antenna 3 of the BTS 1, the TSC will be positioned rather near to the beginning of the time slot, and if the MS 5b is disposed in a larger distance to the antenna 3, the TSC will be positioned towards the end of the time slot. Therefore, when receiving a data signal with an AB in one of the time slots, the BTS 1 has to determine the time of arrival (TOA) of the TSC within the time slot. The determined TOA is communicated to the MS 5, telling the MS 5 to transmit its data in future a certain time period corresponding to the TOA ahead. By transmitting of future data earlier by a time period corresponding to the TOA, a data transmission can be achieved starting exactly at the beginning of the time slot and finishing before the end of the time slot in order to avoid overlapping of data bursts transmitted in subsequent time slots.

As mentioned above, the AB contains a training sequence code (TSC) and signaling data as described in the GSM-specification "3GPP TS 05.02", Section 5.2.7. For EDGE (Enhanced Data for GSM Evolution), three different TSCs are used to signalize to the BTS 1 the capability of the mobile handset 5. TSC 0 indicates that the MS uses the GMSK (Gausssian Minimum Shift Keying) data format, TSC 1 indicates that the MS uses 8PSK (8-phase shift keying) in downlink and uplink, and TSC 2 indicates that the MS uses 8PSK only in downlink. The BTS 1 has to find out the TSC used by the MS 5 and to transmit this information to the base station controller (BSC). This task is performed by the demodulator 7 on the digital part of the transceiver equipment of the BTS 1.

The search routine in the demodulator 7 calculates the correlation of the incoming data with all three TSCs. Because the TOA of the AB within the time slots is undetermined, the correlations have to be performed for all possible TOAs, i. e. for all symbol periods. For the 63 possible TOA-values, a correlation length slightly larger comprising, e. g., 72 symbol periods, is necessary. The full correlations (TSC-length: 41 x correlation length : 72 x different TSCs : 3 = 8856 correlations) cannot be processed in conventional demodulators 7 due to limited processing power and limitations in the used digital signal processor (DSP). Therefore, it is known in the prior art to estimate the TOA of the AB before actually calculating the correlations. By doing so, the correlation does not have to be performed for all possible TOAs, but can be started directly at the estimated TOA or some symbol periods before that. Hence, the amount of correlations to be performed can be reduced and the processing power required for the correlations is significantly reduced. If at least a rough estimation of the TOA of, e. g., a range of 7 can derived, the required processing power is reduced by a factor of 72/7 is approximately 10.

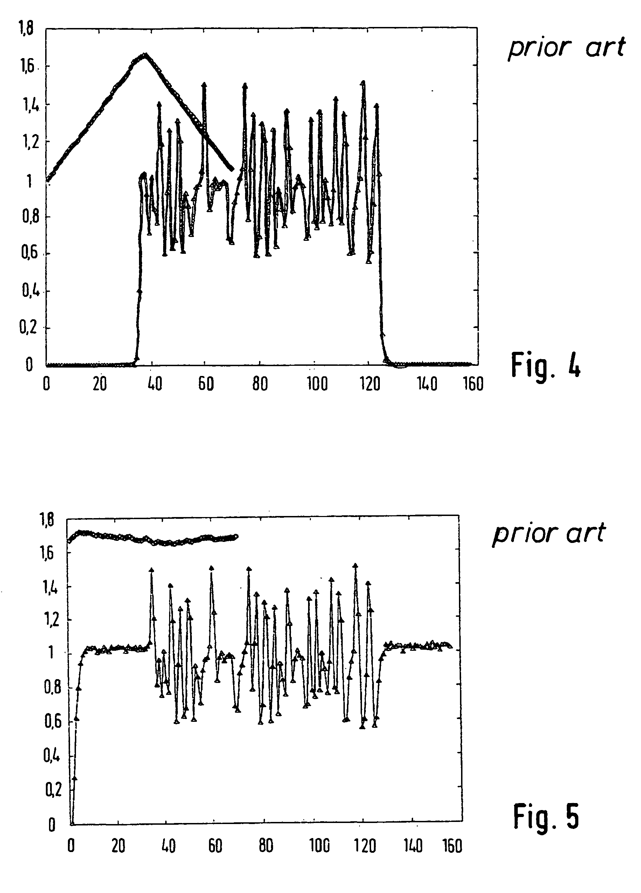

It is known from the prior art to use a so-called energy search algorithm for roughly estimating the TOA of an AB within the time slots. This algorithm is shown in Figures 4 and 5. The GSM-specification "3GPP TS 05.05" describes the so-called burst shaping. As one example of such a shaping of an access burst, the energy of the symbols is shown in Figure 4 (triangles). The energy of a detection window comprising 88 samples (symbol periods) is summarized, leading to the graph represented by diamonds. The maximum of this graph indicates the beginning of the AB. With this rough estimation of the AB position within the time slot the correlation length and the processing power required can be reduced.

However, there are mobile communication systems known in the art designed for data transmission with the power shaping switched off. An example is the data transmission using channel bundling according to EGPRS (Enhanced General Packet Radio Service). Switching off power shaping means that the radio frequency (RF) power is not ramped up and down for two subsequent time slots. An example for an AB without power shaping is shown in Figure 5 (triangles), whereas the increase of the graph during the first six samples is due to the simulation, and, therefore, must be disregarded. It can be clearly seen that - in contrast to the graph of Figure 4 - the energy of the burst is at approximately "1", even before and after the TSC. The graph comprising the diamonds in Figure 5 represents the result of the standard energy search algorithm. It can be clearly seen that the energy search algorithm does not work for estimating the beginning of the AB, i. e. the TOA of the TSC for data transmission with the power shaping turned off. To overcome this drawback, a special signaling is provided in the prior art in order to give the demodulator 7 information, whether TSC-detection is needed or not.

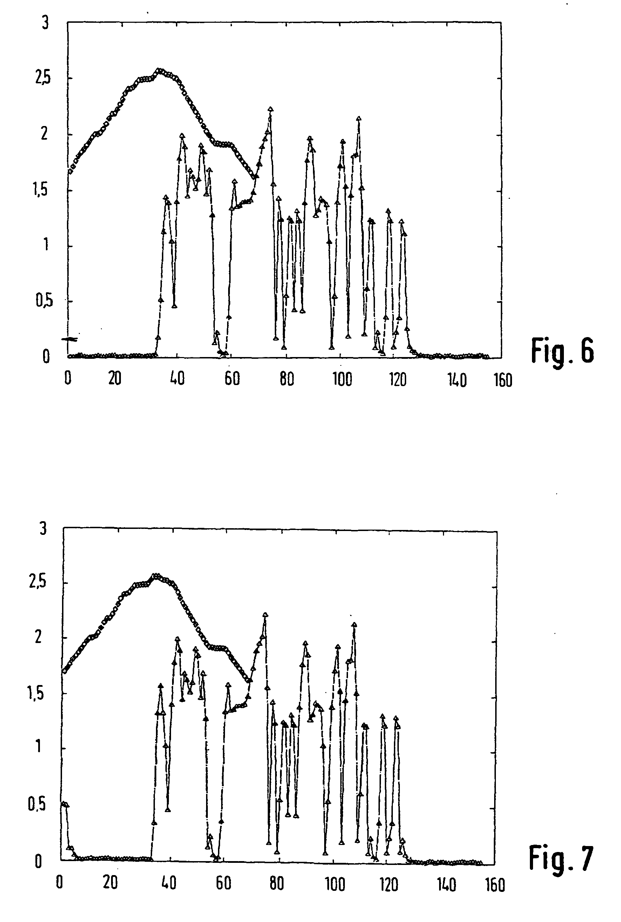

According to the present invention, a method is suggested for roughly estimating the beginning of the TSC, i. e. the TOA of the AB within a time slot, which works with data transmission with power shaping turned on as well as with power shaping switched off. The method according to the present invention uses a so-called phase modulation search algorithm. In the GSM-specification "3GPP TS 05.04" it is shown that outside of the useful part (payload) of the AB the phase of the differential encoder is constant: All bits are "1". The useful part of the burst is specified in GSM-specification "3GPP TS 05.02". After demodulation in the BTS demodulator 7, corresponding to a rotation by p/2, a constant phase modulation is obtained outside of the useful part of the burst - phase modulation is limited to the region where the AB is received. The symbol difference of the received and demodulated complex symbols contained in the symbol periods can be used for the search function according to the present invention. To begin with, a first difference is calculated by determining the difference between two subsequent symbols. Then, the absolute value of the first difference is determined. The absolute value is shown in Figure 6 (graph comprising the triangles). The absolute value of the first difference within a detection window comprising, e. g., 88 samples, is summarized. The graph comprising the summarized absolute value of the first difference is represented by diamonds in Figure 6. The maximum of this graph marks the beginning of the AB. In Figure 6 the power shaping was active. The difference is small, because the symbols outside of the AB are all close to zero in the complex plane. The advantage of the phase modulation search algorithm is its ability to work not only with the power shaping turned on, but also with power shaping switched off. This is visualized in Figure 7. The phase modulation is almost zero outside the access burst. So the graph showing the first difference (comprising the triangles) is close to zero outside of the AB. Again, the graph showing the summarized absolute values of the first differences at its maximum indicates the beginning of the AB.

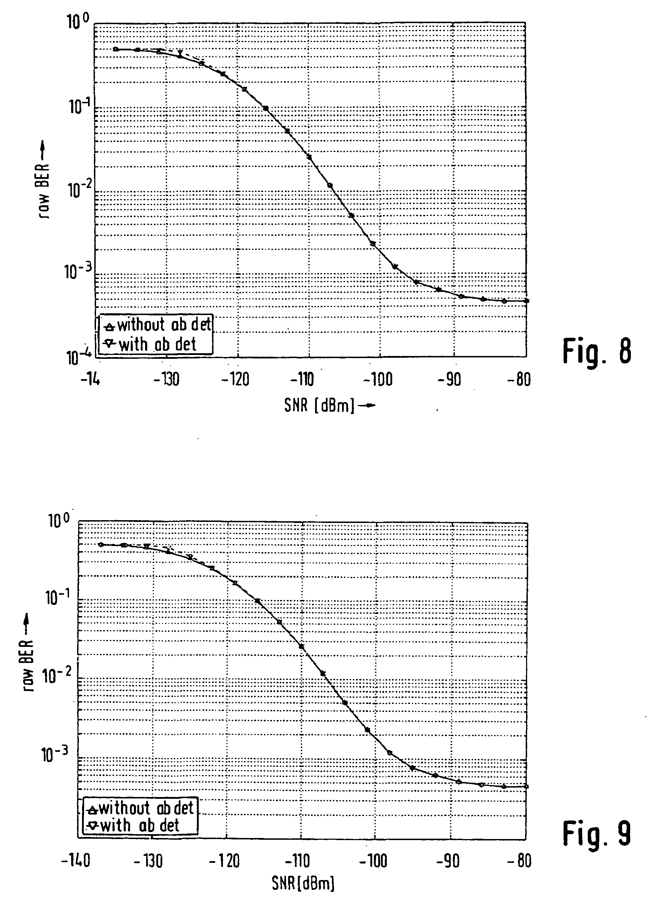

To underline the feasibility of this approach, simulations have been performed, the results of which are shown in Figures 8 and 9. For these simulations the radio performance with a channel profile "TU50" has been simulated using a standard GSM simulation chain. The simulations have been run twice, first without TSC-detection and then with TSC-detection. The difference between both graphs shows the additional errors induced by the TSC-detection with the new phase modulation search algorithm. For SNR (Signaled Noise Ratio) values larger than -120 dBm, which is the operational range for GSM, there are no additional errors visible which could result from the TSC-detection. The deviation of both graphs of Figures 8 and 9 for a high number of errors at -130 dBm is typical for the TSC-detection algorithm and can be observed for the energy search algorithm known from the prior art, too. There is no difference between visible energy shaping activation (Figure 8) and deactivation (Figure 9).

When using the phase modulation search algorithm for determining the TOA of a AB within a time slot, there is no additional signaling information necessary for the demodulator 7 indicating, if TSC-detection should be performed or not. The calculation of the symbol difference is very well feasible without spending high calculation power. Further, the method according to the present invention works in mobile communication systems with power shaping turned on, as well as with power shaping switched off. The present invention offers an easy to realize and very reliable method for determining the TOA of an AB within a time slot.

## Claims

1. Method for estimating the time of arrival, subsequently TOA, of an access burst, subsequently AB, received in a base transceiver station, subsequently BTS (1), of a mobile communication system designed for data transmission in time slots, each time slot being divided into a number of symbol periods, wherein a symbol difference of received and demodulated complex symbols contained in the symbol periods is used for estimating the TOA of the AB, **characterized in that**
- a detection window of a given length is moved over the time slot in discrete steps, each step corresponding to one symbol period, the detection window comprising less symbol periods than the time slot,
- a symbol difference of all complex symbols contained in the symbol periods of the time slot is calculated,
- for each of the discrete steps a sum of the symbol differences for the symbol periods covered by the detection window during the current step is calculated, and
- one of the discrete steps for which the maximum of the sum of the symbol difference occurs is assumed to be the TOA of the AB within the time slot.

2. Method according to claim 1, **characterized in that** for calculating the symbol difference of the complex symbols, for each of the symbol periods the absolute value of the difference of at least two subsequent complex symbols is calculated.

3. Method according to claim 1 or 2, **characterized in that** the detection window length corresponds to the length of the useful part of the Access Burst.

4. Method according to claim 1 or 2, **characterized in that** the detection window is moved over the time slot in discrete steps only until the TOA has been successfully estimated.

5. Method according to one of the preceding claims, **characterized in that** the method is used for estimating the TOA of the AB as part of a method for detecting a training sequence code, subsequently TSC, which is sent from a mobile station, subsequently MS, to the BTS (1) inside the AB.

6. Method according to claim 5, **characterized in that** after estimating the TOA of the AB a correlation of the data contained in the time slot is calculated.

7. Computer program adapted for running on a processor (9) of a base transceiver station, subsequently BTS (1), **characterized in that** the program is programmed to perform the method according to one of the claims 1 to 6 when running on the processor (9).

8. Access Burst, subsequently AB, detector of a base transceiver station, subsequently BTS (1), of a mobile communication system designed for data transmission in time slots, each time slot being divided into a number of symbol periods, wherein the AB-detector comprises means for estimating the time of arrival, subsequently TOA, of the AB based on a symbol difference of received and demodulated complex symbols contained in the symbol periods, **characterized in that** the AB detector comprises
- means for moving a detection window of a given length over the time slot in discrete steps, each step corresponding to one symbol period, the detection window comprising less symbol periods than the time slot,
- means for calculating a symbol difference of all complex symbols contained in the symbol periods of the time slot,
- means for calculating for each of the discrete steps a sum of the symbol differences for the symbol periods covered by the detection window during the current step, and
- means for assuming that one of the discrete steps, for which the maximum of the sum of the symbol difference occurs, is the TOA of the AB within the time slot.

9. AB-detector according to claim 8, **characterized in that** the AB-detector comprises means for performing the method according to one of the claims 2 to 6.

10. Base transceiver station, subsequently BTS (1), of a mobile communication system designed for data transmission in time slots, each time slot being divided into a number of symbol periods, wherein the BTS (1) comprises an AB-detector for estimating the time of arrival, subsequently TOA, of the AB based on a symbol difference of received and demodulated complex symbols contained in the symbol periods, **characterized in that** the BTS (1) comprises an AB detector according to claim 8 or 9.

11. Base transceiver station (1) according to claim 10, **characterized in that** the BTS (1) comprises a demodulator (7) and that the AB-detector makes part of the demodulator (7).

12. Base transceiver station (1) according to claim 11, **characterized in that** the demodulator (7) comprises means for performing the method according to one of the claims 2 to 6.

## Patentansprüche

1. Verfahren zur Schätzung der Ankunftszeit, im Nachfolgenden kurz TOA, eines in einer Basis-Sende/Empfangsstation, im Nachfolgenden kurz BTS (1), empfangenen Zugriffsbursts, im Nachfolgenden kurz AB, eines für die Datenübertragung in Zeitschlitzen vorgesehenen mobilen Kommunikationssystems, wobei jeder Zeitschlitz in eine Anzahl von Symbolperioden unterteilt ist, wobei eine Symboldifferenz von empfangenen und demodulierten komplexen Symbolen, welche in den Symbolperioden enthalten sind, zur Schätzung der TOA der AB benutzt wird , **dadurch gekennzeichnet, dass**
- ein Erkennungsfenster einer gegebenen Länge sich in diskreten Schritten über den Zeitschlitz bewegt, wobei jeder Schritt einer Symbolperiode entspricht, wobei das Erkennungsfenster weniger Symbolperioden als der Zeitschlitz enthält,
- eine Symboldifferenz aller komplexen Symbole, welche in den Symbolperioden des Zeitschlitzes enthalten sind, kalkuliert wird,
- für einen jeden der diskreten Schritte eine Summe der Symboldifferenzen für die vom Erkennungsfenster während des momentan durchgeführten Schrittes abgedeckten Symbolperioden kalkuliert wird, und
- von einem der diskreten Schritte, für welchen das Maximum der Summe der Symboldifferenz auftritt, angenommen wird, dass er die TOA des AB innerhalb des Zeitschlitzes ist.

2. Verfahren nach Anspruch 1, **dadurch gekennzeichnet, dass** zum Kalkulieren der Symboldifferenz der komplexen Symbole, für eine jede der Symbolperioden der absolut Wert der Differenz von mindestens zwei aufeinanderfolgenden komplexen Symbolen kalkuliert wird.

3. Verfahren nach Anspruch 1 oder 2, **dadurch gekennzeichnet, dass** die Länge des Erkennungsfensters der Länge des Nutzteils des Zugriffsbursts entspricht.

4. Verfahren nach Anspruch 1 oder 2, **dadurch gekennzeichnet, dass** das Erkennungsfenster nur so lange in diskreten Schritten über den Zeitschlitz bewegt wird, bis die TOA erfolgreich geschätzt wurde.

5. Verfahren nach einem der vorstehenden Ansprüche, **dadurch gekennzeichnet, dass** das Verfahren zur Schätzung der TOA des AB als Teil eines Verfahrens zum Erkennen eines Trainingssequenzcodes, im Nachfolgenden kurz TSC, welcher von einer Mobilstation, im Nachfolgenden kurz MS, an die BTS (1) im Inneren des AB gesendet wird, angewendet wird.

6. Verfahren nach Anspruch 5, **dadurch gekennzeichnet, dass** nach der Schätzung der TOA des AB eine Korrelation der im Zeitschlitz enthaltenen Daten kalkuliert wird.

7. Computerprogramm, welches fähig ist, auf einem Prozessor (9) einer Basis-Sende/Empfangsstation, im Nachfolgenden kurz BTS (1), zu laufen, **dadurch gekennzeichnet, dass** das Programm dafür programmiert ist, das Verfahren nach einem beliebigen der Ansprüche 1 bis 6 auszuführen, wenn es auf dem Prozessor läuft (9).

8. Zugriffsburst-, im Nachfolgenden kurz AB, Detektor einer Basis-SendeEmpfangsstation, im Nachfolgenden kurz BTS (1), eines mobilen Kommunikationssystems, vorgesehen für die Datenübertragung in Zeitschlitzen, wobei jeder Zeitschlitz in eine Anzahl von Symbolperioden unterteilt ist, wobei der AB-Detektor Mittel zur Schätzung der Ankunftszeit, im Nachfolgenden kurz TOA, des AB auf der Basis einer Symboldifferenz von in den Symbolperioden enthaltenen empfangenen und demodulierten komplexen Symbolen umfasst, **dadurch gekennzeichnet, dass** der AB-Detektor umfasst:
- Mittel zum Bewegen eines Erkennungsfensters einer gegebenen Länge über den Zeitschlitz in diskreten Schritten, wobei jeder Schritt einer Symbolperiode entspricht, wobei das Erkennungsfenster weniger Symbolperioden als der Zeitschlitz umfasst,
- Mittel zum Kalkulieren einer Symboldifferenz aller in den Symbolperioden des Zeitschlitzes enthaltenen komplexen Symbole,
- Mittel zum Kalkulieren einer Summe der Symboldifferenzen für die Symbolperioden, welche während des momentanen Schrittes vom Erkennungsfenster abgedeckt werden für einen jeden der diskreten Schritte, und
- Mittel zur Annahme, dass einer der diskreten Schritte, für welchen das Maximum der Summe der Symboldifferenz auftritt, die TOA des AB innerhalb des Zeitschlitzes ist.

9. AB-Detektor nach Anspruch 8, **dadurch gekennzeichnet, dass** der AB-Detektor Mittel zur Ausführung des Verfahrens nach einem beliebigen der Ansprüche 2 bis 6 umfasst.

10. Basis-Sende/Empfangsstation, im Nachfolgenden kurz BTS (1), eines mobilen Kommunikationssystems, vorgesehen für die Datenübertragung in Zeitschlitzen, wobei jeder Zeitschlitz in eine Anzahl von Symbolperioden unterteilt ist, wobei die BTS (1) einen AB-Detektor zur Schätzung der Ankunftszeit, im Nachfolgenden kurz TOA, des AB auf der Basis einer Symboldifferenz von in den Symbolperioden empfangenen und demodulierten komplexen Symbolen umfasst, **dadurch gekennzeichnet, dass** die BTS (1) einen AB-Detektor nach Anspruch 8 oder 9 umfasst.

11. Basis-Sende/Empfangsstation (1) nach Anspruch 10, **dadurch gekennzeichnet, dass** die BTS (1) einen Demodulator (7) umfasst, und dass der AB-Detektor Bestandteil des Demodulators (7) ist.

12. Basis-Sende/Empfangsstation (1) nach Anspruch 11, **dadurch gekennzeichnet, dass** der Demodulator (7) Mittel zur Ausführung des Verfahrens nach einem beliebigen der Ansprüche 2 bis 6 umfasst.

## Revendications

1. Procédé permettant d'estimer l'heure d'arrivée, ci-après dénommée TOA, d'une salve d'accès, ci-après dénommée AB, reçue dans une station d'émission-réception de base, ci-après dénommée BTS (1), d'un système de communication mobile conçu pour la transmission de données dans des tranches de temps, chaque tranche de temps étant divisée en un certain nombre de périodes symboliques, dans lequel une différence symbolique des symboles complexes reçus et démodulés contenus dans les périodes symboliques est utilisée pour estimer la TOA et l'AB,
**caractérisé en ce que**
- une fenêtre de détection d'une longueur donnée est déplacée pendant la tranche de temps dans des étapes discrètes, chaque étape correspondant à une période symbolique, la fenêtre de détection comprenant moins de périodes symboliques que la tranche de temps,
- une différence symbolique de tous les symboles complexes contenus dans les périodes symboliques de la tranche de temps est calculée,
- pour chacune des étapes discrètes un total des différence symboliques pour les périodes symboliques couvertes par la fenêtre de détection pendant l'étape courante est calculé, et
- une des étapes discrètes pour laquelle le maximum du total de la différence symbolique apparaît est supposée être la TOA de l'AB à l'intérieur de la tranche de temps.

2. Procédé selon la revendication 1, **caractérisé en ce que** pour calculer la différence symbolique des symboles complexes, pour chacune des périodes symboliques la valeur absolue de la différence d'au moins deux symboles complexes subséquents est calculée.

3. Procédé selon la revendication 1 ou 2, **caractérisé en ce que** la longueur de la fenêtre de détection correspond à la longueur de la partie utile de la salve d'accès.

4. Procédé selon la revendication 1 ou 2, **caractérisé en ce que** la fenêtre de détection est déplacée pendant la tranche de temps dans des étapes discrètes seulement jusqu'à ce que la TOA ait été estimé avec succès.

5. Procédé selon l'une quelconque des revendications précédentes, **caractérisé en ce que** le procédé est utilisé pour estimer la TOA de l'AB comme faisant partie d'un procédé de détection d'un code de séquence de formation, ci-après dénommé TSC, qui est envoyé d'une station mobile, ci-après dénommée MS, au BTS (1) à l'intérieur de l'AB.

6. Procédé selon la revendication 5, **caractérisé en ce que**, après avoir estimé la TOA de l'AB, une corrélation des données contenues dans la tranche de temps est calculée.

7. Programme informatique apte à être exécuté sur un processeur (9) d'une station d'émission-réception de base, ci-après dénommé BTS (1), **caractérisé en ce que** le programme est programmé pour réaliser le procédé selon l'une quelconque des revendications 1 à 6 lorsqu'il est exécuté sur le processeur (9).

8. Salve d'accès, ci-après dénommée AB, détecteur d'une station d'émission-réception de base, ci-après dénommé BTS (1), d'un système de communication mobile conçu pour la transmission de données dans des tranches de temps, chaque tranche de temps étant divisée en un certain nombre de périodes symboliques, dans laquelle le détecteur d'AB comprend des moyens destinés à estimer l'heure d'arrivée, ci-après dénommée TOA, de l'AB sur la base d'une différence symbolique des symboles complexes reçus et démodulés contenus dans les périodes symboliques, **caractérisée en ce que** le détecteur d'AB comprend :
- des moyens destinés à déplacer une fenêtre de détection d'une longueur donnée pendant la tranche de temps dans des étapes discrètes, chaque étape correspondant à une période symbolique, la fenêtre de détection comprenant moins de périodes symboliques que la tranche de temps ,
- des moyens destinés à calculer une différence symbolique de tous les symboles complexes contenus dans les périodes symboliques de la tranche de temps,
- des moyens destinés à calculer pour chacune des étapes discrètes un total des différences symboliques pour les périodes symboliques couvertes par la fenêtre de détection pendant l'étape courante, et
- des moyens permettant de supposer qu'une des étapes discrètes, pour laquelle le maximum du total de la différence symbolique apparaît, est la TOA de l'AB à l'intérieur de la tranche de temps.

9. Détecteur d'AB selon la revendication 8, **caractérisé en ce que** le détecteur d'AB comprend des moyens permettant de réaliser le procédé selon l'une quelconque des revendications 2 à 6.

10. Station d'émission-réception de base, ci-après dénommée BTS (1), d'un système de communication mobile conçu pour la transmission de données dans des tranches de temps, chaque tranche de temps étant divisée en un certain nombre de périodes symboliques, dans laquelle le BTS (1) comprend un détecteur d'AB destiné à estimer l'heure d'arrivée, ci-après dénommée TOA, de l'AB sur la base d'une différence symbolique des symboles complexes reçus et démodulés contenus dans les périodes symboliques, **caractérisée en ce que** le BTS (1) comprend un détecteur d'AB selon la revendication 8 ou 9.

11. Station d'émission-réception de base (1) selon la revendication 10, **caractérisée en ce que** le BTS (1) comprend un démodulateur (7) et **en ce que** le détecteur d'AB fait partie du démodulateur (7).

12. Station d'émission-réception de base (1) selon la revendication 11, **caractérisée en ce que** le démodulateur (7) comprend des moyens permettant de réaliser le procédé selon l'une quelconque des revendications 2 à 6.
